(19) Europäisches Patentamt European Patent Office Office européen des brevets

(11) **EP 2 638 786 B1**

(12) **EUROPEAN PATENT SPECIFICATION**

(45) Date of publication and mention of the grant of the patent:
**19.03.2014 Bulletin 2014/12**

(21) Application number: **11797367.7**

(22) Date of filing: **04.11.2011**

(51) Int Cl.:
*H05B 41/288* (2006.01)     *H05B 41/292* (2006.01)

(86) International application number:
**PCT/IB2011/054931**

(87) International publication number:
**WO 2012/063178 (18.05.2012 Gazette 2012/20)**

(54) **METHOD AND DEVICE FOR DRIVING AN HID LAMP**

VERFAHREN UND VORRICHTUNG ZUR ANSTEUERUNG EINER HID-LAMPE

PROCÉDÉ ET DISPOSITIF DE COMMANDE D'UNE LAMPE HID

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2010 EP 10190595**

(43) Date of publication of application:
**18.09.2013 Bulletin 2013/38**

(73) Proprietor: **Koninklijke Philips N.V.
5656 AE Eindhoven (NL)**

(72) Inventors:
• **WERNARS, Johannes Petrus**
  **NL-5656 AE Eindhoven (NL)**
• **VAN ZUNDERT, Roy Hendrik Anna Maria**
  **NL-5656 AE Eindhoven (NL)**
• **VAN MEEL, Marcus Cornelis**
  **NL-5656 AE Eindhoven (NL)**

(74) Representative: **van Eeuwijk, Alexander Henricus Waltherus
Philips
Intellectual Property & Standards
P.O. Box 220
5600 AE Eindhoven (NL)**

(56) References cited:
**EP-A1- 1 720 383          EP-A1- 1 729 549
WO-A1-03/061352          DE-A1-102005 051 568
US-A1- 2004 183 472**

## Description

FIELD OF THE INVENTION

The present invention relates in general to the field of discharge lamps, particularly HID lamps, i.e. High Intensity Discharge Lamps, also indicated as high pressure discharge lamps.

BACKGROUND OF THE INVENTION

HID lamps as such are commonly known. Therefore, an elaborate explanation is omitted here. Suffice it to say that such lamp in most cases comprises an elongate sealed discharge vessel filled with an ionizable gas filling and having two electrodes penetrating the vessel wall. Alternatively the discharge vessel can be spherical shaped. During operation, a high voltage causes a discharge, resulting in a conductive plasma allowing a lamp current between said electrodes through the ionized gas. As long as the current flows, the plasma is maintained. The amount of light generated depends on the current magnitude, and also the colour may vary with current.

In principle, it is possible that the current flows in one direction only (DC). However, this leads to undesired wear of one of the electrodes and hence a reduction of the life time of such lamp. Therefore, it has already been known for a long time to operate a lamp with alternating current direction, indicated as commutating direct current, i.e. the current magnitude remains constant but the direction is changed at a commutation frequency. The commutation frequency is typically in the order of 70 - 400 Hz. This type of operation is also indicated as Low Frequency Square Wave current.

HID lamps are favourable with a view to light output and energy consumption. For driving such lamps, electronic drivers are required. Several types of drivers have already been developed. One driver topology that has been proven as reliable, efficient, small size, few components and low cost is the Half-Bridge Commutating Forward (HBCF) topology. Furthermore, since the HBCF driver has become a popular driver that is much applied in lamp systems, the large-scale manufacture has further reduced costs. Therefore, it is desirable to provide a lamp system, comprising the combination of a lamp and a lamp driver, wherein the lamp is an HID lamp and wherein the driver has HBCF topology; such system will hereinafter be indicated as an HID/HBCF system.

SUMMARY OF THE INVENTION

In use, there is a desire to be able to dim a lamp. Since the light output is typical proportional to the lamp current, dimming can be achieved by reducing the lamp current. In a HID/HBCF system a problem has been found that the HID lamp tends to extinguish when being dimmed, wherein the dim level at which the lamp extinguishes may depend on circumstances.

An objective of the present invention is to provide a solution to this problem, or in any case to reduce the lamp's tendency to extinguish.

The solution proposed by the present invention is based on an understanding of the physics behind the extinguishing problem. In an HBCF driver, a commutating current source receives power from a DC voltage source, having a suitable voltage higher than the lamp's operational voltage, which is typically in the range of 80 - 90 V. However, immediately after the commutation moments, the lamp's voltage briefly rises to a value that may be twice as high, and this becomes worse with reducing lamp current. When the lamp voltage reaches the output voltage of the voltage source, the current source is no longer capable to maintain the lamp current, resulting in a further increase of the lamp's voltage. Thus, the lamp current collapses: the lamp extinguishes. Based on this understanding, the present invention proposes to increase the output voltage of the DC voltage source during dimming: this will allow the current source to better maintain the lamp current and avoid extinguishing.

Further advantageous elaborations are mentioned in the dependent claims.

BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:

figure 1 schematically shows a block diagram of a lamp system;
figure 2 is a graph showing lamp current and lamp voltage in normal mode as a function of time;
figure 3 is a graph showing lamp current and lamp voltage in dimmed mode as a function of time according to the prior art;
figure 4 is a graph showing lamp current and lamp voltage in dimmed mode as a function of time according to the present invention;
figures 5A-5D are graphs illustrating several embodiments of a relationship between intermediate voltage and dim level.

DETAILED DESCRIPTION OF THE INVENTION

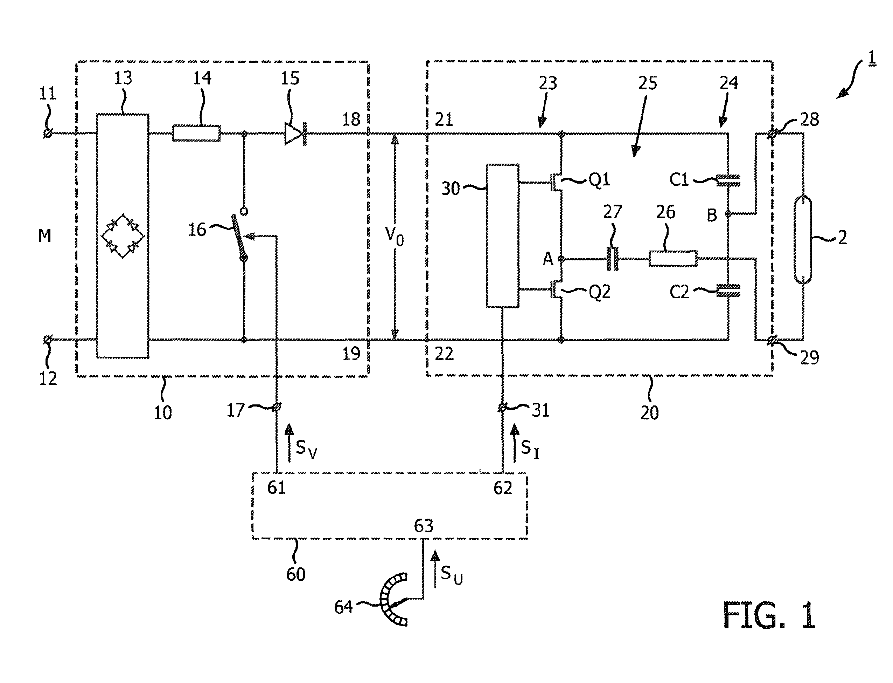

Figure 1 schematically shows a block diagram of a lamp system 1 according to the present invention for driving an HID lamp 2. This system comprises a first stage 10, a second stage 20 and a control device 60.

The first stage 10 has input terminals 11, 12 for connecting to mains voltage M, in Europe typically 230 V @ 50 Hz, and output terminals 18, 19 for providing a DC output voltage $V_0$. While this is an output voltage for the first stage 10, it is not the system output voltage, therefore this voltage will hereinafter also be indicated as intermediate voltage $V_0$. This intermediate voltage $V_0$ is typically higher than the nominal mains voltage, therefore the first stage 10 is also indicated as upconverter. The first stage 10 is designed to perform the function of power factor correction, therefore the first stage 10 is also indicated as PFC stage. Upconverter stages in lamp drivers are commonly known, and a detailed description and explanation of design and operation thereof is not needed for a person skilled in the art. By way of example, the figure illustrates a buck converter design, including a series arrangement of an inductor 14 and a diode 15 and a controllable switch 16 connected to the node between inductor 14 and diode 15, but other designs are also possible. It is important that the upconverter 10 is a controllable upconverter, having a control input 17 for receiving a voltage control signal $S_V$ capable of adjusting the intermediate voltage level V0: in this example, such control signal $S_V$ controls the switching of the switch 16, as is known to a person skilled in the art.

The system 1 further comprises a rectifier 13 which may be an integral part of the upconverter 10, as shown, but which also may be a separate stage before the upconverter 10.

The second stage 20 has voltage rails 21, 22 connected to the output terminals 18, 19 of the upconverter 10, and output terminals 28, 29 for connection to the HID lamp 2. Since, in normal operation, the output voltage will be lower than the input voltage, the second stage 20 is also indicated as downconverter. The second stage 20 is designed to perform the function of commutating current source, and is designed as an HBCF circuit, therefore the second stage 20 is also indicated as HBCF current source. This design is commonly known, and a detailed description and explanation of design and operation is not needed for a person skilled in the art; by way of example, reference is made to WO-2008/072136. Suffice it so say that the HBCF current source 20 comprises a first series arrangement 23 of two controllable switches Q1, Q2 connected between said two voltage rails 21, 22, a second series arrangement 24 of two capacitors C1, C2 connected between said two voltage rails 21, 22, and a third series arrangement 25 of said output terminals 28, 29, an inductor 26 and a capacitor 27 connected between on the one hand a node A between said two controllable switches Q1, Q2 and on the other hand a node B between said two capacitors C1, C2. It is important that the HBCF current source 20 is a controllable current source, having a control input 31 for receiving a current control signal $S_I$ capable of adjusting the output current magnitude: in this example, such control signal $S_I$ controls the switching of the switches Q1, Q2, as is known to a person skilled in the art.

It is to be noted that the HBCF current source 20 may include a switch controller 30, receiving a single control signal $S_I$ and generating individual control signals for the switches Q1, Q2, as shown. However, it is also possible that the HBCF current source 20 receives two separate control signals for direct connection to the individual switches Q1, Q2, in which case the combination of such two separate control signals will be indicated as "the current control signal".

The system 1 further comprises a control device 60, having a voltage control output 61 coupled to the control input 17 of the controllable upconverter 10 and a current control output 62 coupled to the control input 31 of the controllable HBCF current source 20. Typically, the control device 60 will also have a user input 63 for receiving a user input signal $S_U$ that is indicative for a desired dim level. The user input signal $S_U$ may be generated by a user-operable input device 64 such as for instance a potentiometer associated with the control device 60, but it is also possible that the user input signal $S_U$ is generated by a higher ranking control device or by a receiver of a remote control system.

It is noted that the controllable upconverter 10 and the controllable HBCF current source 20 may in fact be standard components. Persons skilled in the art will know what type of control signals are needed, and how these control signals should be adapted to obtain a certain desired intermediate voltage level $V_0$ and a certain desired output current magnitude, so that it is not necessary to explain these details here.

The lamp system 1 is designed for driving a specific type of lamp and has a certain nominal rating, corresponding to a certain nominal energy consumption, a certain nominal light output of the specific lamp type, a certain nominal lamp current magnitude IN and a certain nominal value $V_N$ for the intermediate voltage level $V_0$. The control device 60 is capable of operating in a normal mode in which it generates its control signals Sv and $S_I$ such that these nominal specifications are melt. It is noted that such nominal control signals may be fixed, set by the manufacturer, but it is also possible that the lamp system 1 comprises a voltage sensor for measuring the actual intermediate voltage level $V_0$ and a current sensor for measuring the actual output current, in which case these sensors provide feedback signals to the control device 60 and the control device 60 adapts its control signals $S_V$ and $S_I$ such that the actual intermediate voltage level $V_0$ and the actual output current are equal to the desired target values, but this is not shown for sake of convenience.

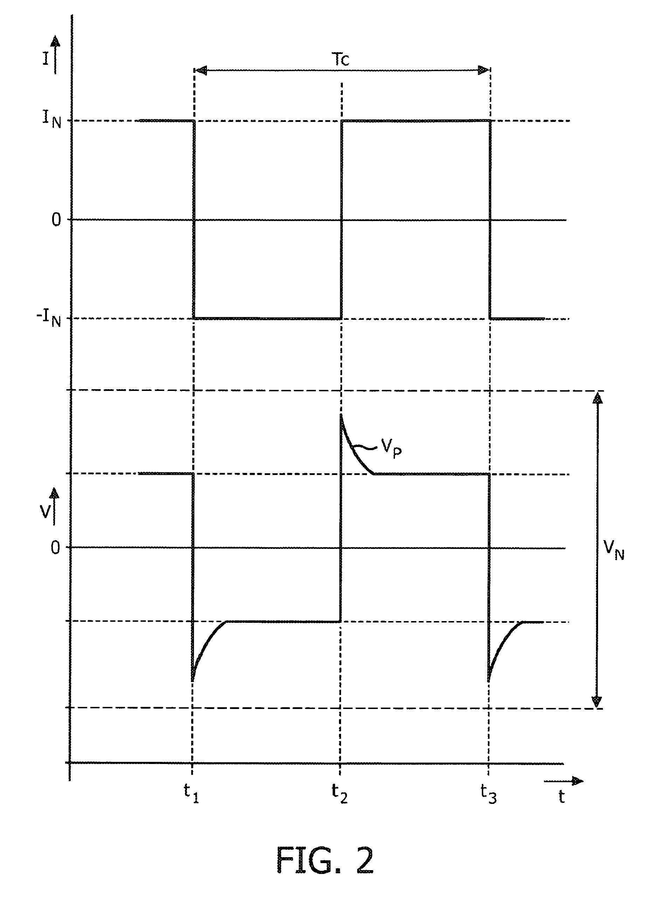

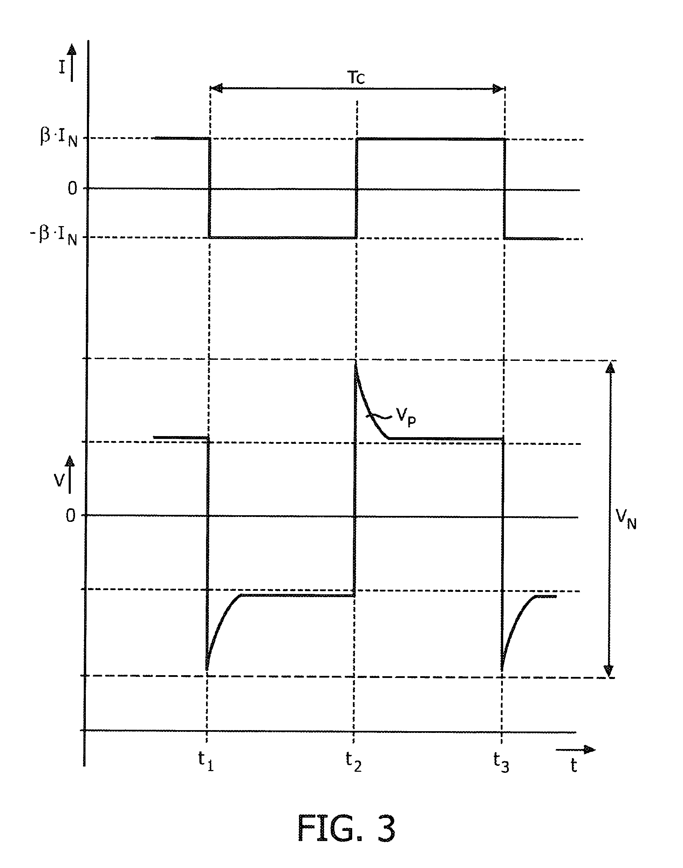

The operation of the system will now be explained with reference to figures 2 and 3. Figure 2 is a graph showing output current and output voltage (i.e. lamp current and lamp voltage) in normal mode as a function of time. The figure shows that the lamp current has a constant nominal magnitude IN (a possible small current ripple is not shown) but changes direction at commutation moments t1, t2, t3, etc, with a commutation period Tc and a commutation frequency fc = 1/Tc, which may be in the range of about 70 to about 400 Hz. Figure 2 also shows that the lamp voltage shows a similar waveform of a constant value that changes sign in synchronisation with the lamp current.

It is noted that commutation is not infinitely fast, as suggested by the figure, but actually takes some commutation time, but this is not shown for sake of convenience. During commutation, therefore, the current magnitude reduces to zero and then rises again to the nominal value IN. Within this brief commutation duration, the plasma in the lamp is not sustained as normal, and the discharge in the lamp is tending to stop. After commutation, therefore, the discharge requires a boost in the form of a re-ignition voltage pulse Vp; this is also shown in the figure.

Due to the lamp characteristics, the voltage drop over the lamp will substantially have a constant value. The precise value of this constant voltage drop may depend on the specific lamp parameters such as size and materials used, but is typically in the range of 80 - 90 V. The re-ignition voltage pulse Vp may typically have an amplitude of about 160 V. While the precise value of the intermediate voltage $V_0$ is not critical, it must be set such as to be larger than twice the expected value of the re-ignition voltage pulse Vp in order to accommodate for the positive and the negative pulse, and there should be some margin left. On the other hand, with higher values of the intermediate voltage $V_0$, dissipation losses in the system increase and the temperature of the components rises, so it is desirable to keep the intermediate voltage $V_0$ low. In practice, the intermediate voltage $V_0$ is typically set to have a nominal value $V_N$ of about 400 V.

The control device 60 is also capable of operating in a dim mode in which it generates its control signals $S_V$ and $S_I$ such that the light output is less than nominal. More dimming will mean less light. In order to avoid misunderstandings, a dim level $\beta$ will be defined in a range from 0 to 1 (or 0% to 100%), wherein a dim level 0 corresponds to full dimming and hence zero light output and wherein a dim level 1 corresponds to no dimming and hence nominal light output.

Persons skilled in the art will realize that there is a relationship between current magnitude and light output. It is possible to consider dimming with a view to the observer, in terms of light output; in such interpretation, a "dim level $\beta$" will mean that the actual light output level is $\beta$ times the nominal light output level which corresponds to a lowered current magnitude which is not necessarily equal to $\beta$ times the nominal current magnitude. It is also possible to consider dimming with a view to the current control; in such interpretation, a "dim level $\beta$" will mean that the actual current magnitude is $\beta$ times the nominal current magnitude which corresponds to a lowered light output level which is not necessarily equal to $\beta$ times the nominal light output level. These approaches are considered to be equivalent: if the current is dimmed by a factor $\beta1$, the light will be dimmed by a factor $\beta2$, where $\beta2$ may be unequal to $\beta1$, and wherein the ratio $\beta2/\beta1$ does not have to be constant. For sake of convenience in explaining the invention, it is assumed in the following that the light output is directly proportional to the current magnitude, which in practice does not need to be the case.

Figure 3 is a graph comparable to figure 2 illustrating dim operation. Dimming is performed by reducing the current magnitude: therefore, the figure shows that the lamp current has a constant magnitude $\beta \cdot I_N$. In view of the lower lamp current, the temperature of the lamp electrodes will be lower, resulting in an increase of the voltage drop over the lamp. Further, re-ignition of the discharge after commutation will be more difficult, requiring a higher re-ignition voltage pulse Vp. All in all, the margin between the intermediate voltage $V_0$ and the top-top distance between the positive and negative re-ignition voltage pulses has reduced.

In prior art systems, during dimming, the intermediate voltage $V_0$ is maintained constant at the nominal value $V_N$. With reducing dim level, it becomes more difficult for the HBCF current source to actually produce the desired output current at the required output voltage. Undesirable flicker may occur, and the lamp may even extinguish. Since this is clearly undesirable, the dim level may not be reduced to values where such phenomena occur; in other words, the allowable dim range is limited.

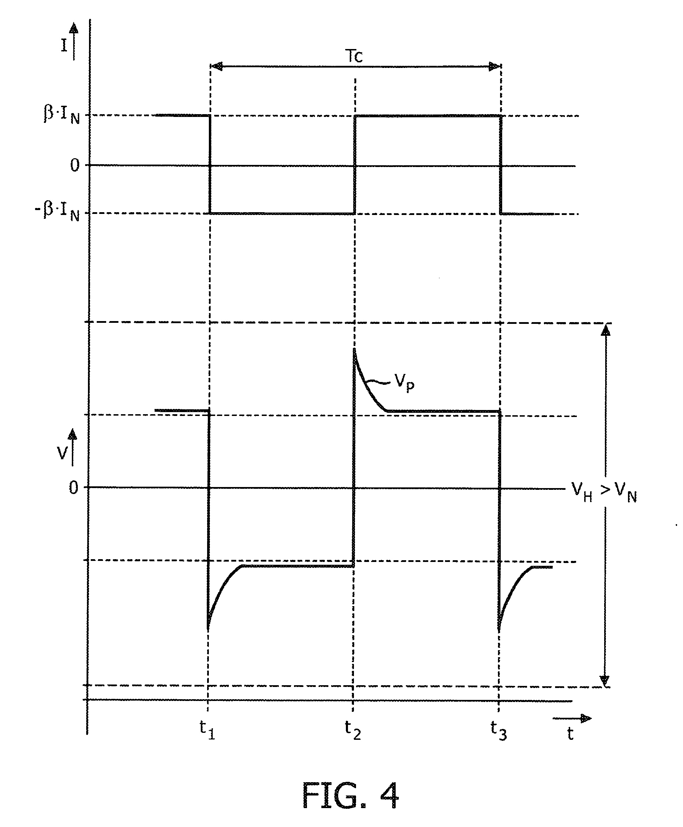

Figure 4 is a graph comparable to figure 3, illustrating dim operation according to the present invention. In order to avoid or at least reduce the above-mentioned problem, the control device 60 is designed, in the dim mode, to generate its voltage control signal Sv such as to increase the intermediate voltage $V_0$ to a value $V_H$ higher than the nominal value $V_N$. In a suitable embodiment, this value $V_H$ is 30% higher than $V_N$.

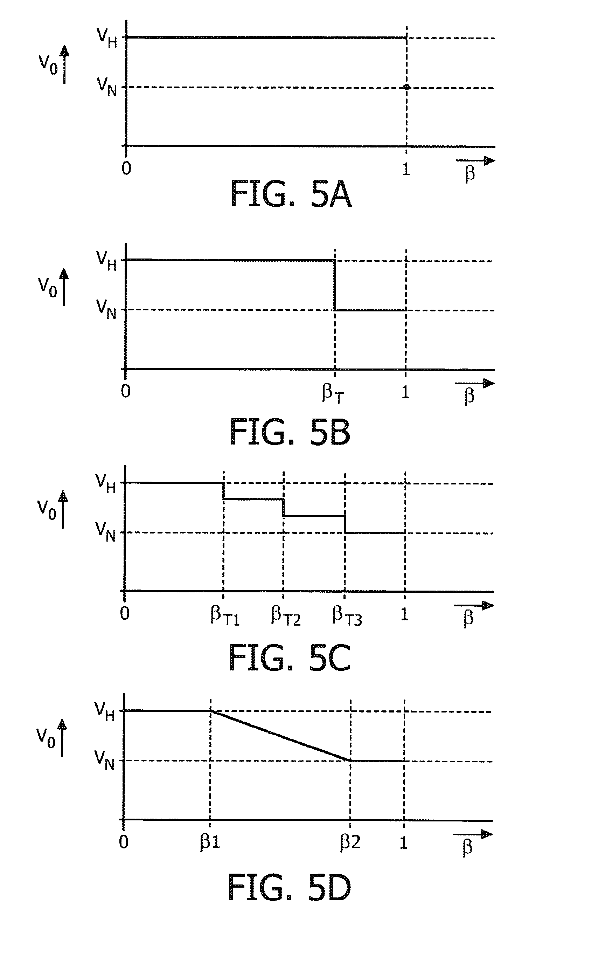

There are several methods possible for implementing this invention, which will be explained with reference to figures 5A-5D, which are graphs illustrating a relationship between intermediate voltage $V_0$ and dim level $\beta$.

In one embodiment, the intermediate voltage $V_0$ is always increased to said higher value $V_H$ when in dim mode, irrespective of the actual dim level, i.e. for all values of $\beta < 1$ (see figure 5A). However, it seems justified to consider that such increase is not needed for dim levels close to 1. So, in another embodiment, a dim level threshold $\beta_T$ is defined, and the intermediate voltage $V_0$ is always set at the nominal value $V_N$ for $\beta_T < \beta < 1$ and set at the increased value $V_H$ for all values of $\beta < \beta_T$ (see figure 5B). For $\beta = \beta_T$, the intermediate voltage $V_0$ may be either equal to $V_N$ or to $V_H$.

In yet another embodiment, it is considered that the desire for increasing $V_0$ becomes stronger with decreasing dim level. Therefore, multiple thresholds $\beta_{T1}$, $\beta_{T2}$, $\beta_{T3}$ etc may be defined, while always the intermediate voltage $V_0$ is constant between two neighbouring thresholds whereas the intermediate voltage $V_0$ for $\beta$ lower than one such threshold is higher than for $\beta$ higher than the same threshold (see figure 5C). The distances between thresholds do not have to be mutually equal, and the voltage steps at the different thresholds do not have to be mutually equal.

Especially in applications where the dim level may be gradually reduced or increased, but not restricted to such applications, it is preferred not to use a step-wise transition from one discrete voltage value to another discrete voltage value when passing a certain dim level value. Thus, in another embodiment, the intermediate voltage $V_0$ is a continuous function of the dim level $\beta$. Figure 5D illustrates an embodiment where a dim level range is defined between two border values $\beta 1$ and $\beta 2$. Within this range, the intermediate voltage $V_0$ may be linearly proportional to $\beta$, i.e. $dV_0/d\beta$ is constant. The higher border value $\beta 2$ may be equal to 1, and/or the lower border value $\beta 1$ may be equal to zero.

Instead of a linear relationship, a progressive or curved relationship is possible, with the concave side of the curve being directed either upwards or downwards. Also an S-shaped curve is possible.

Further, it is possible to have two or more of such ranges, wherein the relationship within one range differs from the relationship within another range.

In an experimentally tested embodiment, considered to be adequate, there are two ranges.

Within the first range, from $\beta = 0$ to $\beta = \beta_T$, the intermediate voltage $V_0$ is always equal to $V_H$.

Within the second range, from $\beta = \beta_T$ to $\beta = 1$, the intermediate voltage $V_0$ is proportional to $\beta$ in accordance with the formula

$$V_0 = \frac{(V_H - V_N) \cdot (1 - \beta)}{(1 - \beta_T)}$$

This corresponds to the embodiment of figure 5D, with $\beta 2 = 1$.

In the experimentally tested embodiment, $\beta_T$ was set at 0.8, $V_N$ was equal to 400 V, and $V_H$ was equal to 520 V.

In the above, the dimmed state has been described as a steady state. In the following, a transition from a first dim level to a second dim level will be considered. When this transition is done slowly, it will be allowable at all times during the transition to consider the momentary state as being a steady state. When the transition is done quickly, it is better to take a different approach. When the second dim level is higher than the first dim level, the current magnitude at the second dim level has increased and the intermediate voltage may be lowered from a first value corresponding to the first dim level to a second value corresponding to the second dim level; it is preferred to lower the intermediate voltage after the transition to the second dim level has been completed. Conversely, when the second dim level is lower than the first dim level, the current magnitude at the second dim level has decreased and the intermediate voltage may need to be increased from a first value corresponding to the first dim level to a second value corresponding to the second dim level; it is preferred to increase the intermediate voltage from said first value to said second value before lowering the dim level.

Summarizing, the present invention provides a method for driving and dimming an HID lamp 2, the method comprising the steps of:

> providing a controllable HBCF current source stage 20;
> using the HBCF current source stage 20 to generate commutating DC lamp current I having alternating current direction;
> supplying the HBCF current source stage 20 with an intermediate voltage $V_0$. In normal mode, the commutating DC lamp current I is generated with a predetermined nominal current magnitude IN while the intermediate voltage $V_0$ has a predetermined nominal level $V_N$.

In a dim mode, the commutating DC lamp current I is generated with a reduced current magnitude lower than said nominal current magnitude $I_N$ while the intermediate voltage $V_0$ has an increased level $V_H$ higher than said nominal level $V_N$.

While the invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims.

It is further noted that in the above explanation the current magnitude, in steady state, is assumed to be substantially constant as a function of time. However, even in normal mode, and the same applies to dim mode, it may be desirable that the current magnitude is varied as a function of time. Such variation may for instance be a quick increase of the current magnitude immediately before commutation in order to make re-ignition easier. It is not necessary, and would actually be counter productive, if in such case the intermediate voltage would be briefly lowered in synchronisation with such current peak. On the other hand, such variation may for instance be a gradual increase/decrease on a time scale in the order of minutes, in any case longer than the mains period.

A slow variation is typically executed when illumination is switched from one dim level to another in a manner such as to be hardly noticeable to the human eye. Such variation takes place on a time scale of minutes, in any case much longer than the mains period. In such case, the control device will adapt the intermediate voltage in the manner described above. Variations taking place between two consecutive commutation moments, i.e. on a time scale much less than the mains period, will not be followed by the control device: in principle, the intermediate voltage level is kept constant in the time interval between two consecutive commutation moments. For implementing the present invention, the intermediate voltage level can be calculated on the basis of the average current magnitude, averaged over the time between two consecutive commutation moments. It is also possible that the intermediate voltage level is calculated on the basis of the lowest current magnitude occurring in the time interval between two consecutive commutation moments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

**Claims**

1. Lamp system (1) for driving a HID lamp (2), the system comprising:

   a controllable upconverter voltage source stage designed to provide an intermediate voltage $(V_0)$;
   a controllable HBCF current source stage (20), having voltage rails (21, 22) connected to receive the intermediate voltage $(V_0)$, and having output terminals (28, 29) connected to the lamp (2), the current source stage (20) being designed to generate commutating DC lamp current (I) having alternating current direction;
   a control device (60) for controlling the upconverter stage (10) and the current source stage (20);

   the control device (60) operating in a normal mode or in a dim mode,

   the control device (60) being designed to generate control signals $(S_V, S_I)$ for the upconverter stage (10) and the current source stage (20), respectively, such that the intermediate voltage $(V_0)$ has a predetermined nominal value $(V_N)$ and the lamp current (I) has a predetermined nominal magnitude (IN) when operating in normal mode;
   and the control device (60) being designed to generate the current control signal $(S_I)$ so that the lamp current (I) has a magnitude $(\beta \cdot I_N)$ lower than the nominal current magnitude $(I_N)$, when operating in the dim mode, $\beta$ being designating a dim level in a range from 0 to 1; the control device (60) being further designed to generate the voltage control signal $(S_V)$ so that the intermediate voltage $(V_0)$ has a value $(V_H)$ higher than the nominal intermediate voltage level $(V_N)$, for at least a range of values of the dim level.

2. System according to claim 1, wherein the intermediate voltage $(V_0)$ has the higher value $(V_H)$ for all values of $\beta < 1$.

3. System according to claim 1, wherein the intermediate voltage $(V_0)$ has the higher value $(V_H)$ for all values of $\beta < \beta_T$ and has the nominal value $(V_N)$ for all values of $\beta$ in the range $\beta_T < \beta < 1$, with $\beta_T$ indicating a predetermined threshold dim level.

4. System according to claim 1, having at least one predetermined threshold dim level $(\beta_{T1}, \beta_{T2}, \beta_{T3},)$, wherein the intermediate voltage $(V_0)$ has a higher value for a dim level lower than such threshold dim level and a lower value for a dim level higher than the same threshold dim level.

5. System according to claim 1 or claim 4, having at least two predetermined threshold dim levels $(\beta_{T1}, \beta_{T2}, \beta_{T3},)$, wherein the intermediate voltage $(V_0)$ has a constant value for all values of $\beta$ in between two successive threshold dim levels.

6. System according to claim 1, having at least one dim range between two predetermined border values $\beta 1$ and $\beta 2$, wherein, within such dim range, the intermediate voltage $(V_0)$ is a continuous function of the dim level $\beta$, wherein one of said border values may be equal to 0 and/or wherein one of said border values may be equal to 1.

7. System according to claim 6, wherein said continuous function is a linear function.

8. System according to claim 1, having a dim range between 0 and a predetermined first border value $\beta 1$ in which the intermediate voltage $(V_0)$ always has the higher value $(V_H)$, and having a dim range between 1 and a predetermined second border value $\beta 2$ in which the intermediate voltage $(V_0)$ always has

the nominal value ($V_N$).

9. Method for driving and dimming an HID lamp (2), the method comprising the steps of:

providing a controllable HBCF current source stage (20);

using the HBCF current source stage (20) to generate commutating DC lamp current (I) having alternating current direction;

supplying the HBCF current source stage (20) with an intermediate voltage ($V_0$);

in normal mode, generating the commutating DC lamp current (I) with a predetermined nominal current magnitude (IN) while the intermediate voltage ($V_0$) has a predetermined nominal level ($V_N$);

and in a dim mode, generating the commutating DC lamp current (I) with a current magnitude lower than said nominal current magnitude (IN) while the intermediate voltage ($V_0$) has a level ($V_H$) higher than said nominal level ($V_N$).

10. Method according to claim 9, wherein the HID lamp (2) is dimmed by gradually reducing the current magnitude, and wherein the intermediate voltage ($V_0$) is increased stepwise when passing a predetermined threshold dim level ($\beta_T$; $\beta_{T1}$, $\beta_{T2}$, $\beta_{T3}$).

11. Method according to claim 9, wherein the HID lamp (2) is dimmed by gradually reducing the current magnitude, and wherein, at least within a certain dim range, the intermediate voltage ($V_0$) is increased continuously in proportion with the reduction of the current magnitude.

12. Method according to claim 9, wherein the HID lamp (2) is dimmed by reducing the current magnitude from a first value to a second value, and wherein the intermediate voltage ($V_0$) is increased to a voltage value corresponding to the second current value before the current magnitude is decreased.

13. Method according to claim 9, wherein dimming of the HID lamp (2) is reduced by increasing the current magnitude from a first value to a second value, and wherein the intermediate voltage ($V_0$) is decreased to a voltage value corresponding to the second current value after the current magnitude has increased.

**Patentansprüche**

1. Lampensystem (1) zur Ansteuerung einer HID-Lampe (2), wobei das Lampensystem umfasst:

eine regelbare Spannungshochsetzstellerstufe, die so vorgesehen ist, dass sie eine Zwischen-

spannung ($V_0$) bereitstellt;

eine regelbare HBCF-Stromquellenstufe (20) mit Spannungsschienen (21, 22), die so geschaltet sind, dass sie die Zwischenspannung ($V_0$) empfangen, sowie mit Ausgangsanschlüssen (28, 29), die mit der Lampe (2) verbunden sind, wobei die Stromquellenstufe (20) so vorgesehen ist, dass sie kommutierenden Lampengleichstrom (I) mit alternierender Stromrichtung erzeugt;

eine Steuereinrichtung (60) zur Steuerung der Hochsetzstellerstufe (10) und der Stromquellenstufe (20);

wobei die Steuereinrichtung (60) in einem normalen Modus oder in einem Dimmungsmodus arbeitet,

wobei die Steuereinrichtung (60) so eingerichtet ist, dass sie Steuersignale ($S_V$, $S_1$) für die Hochsetzstellerstufe (10) beziehungsweise die Stromquellenstufe (20) so erzeugt, dass die Zwischenspannung ($V_0$) bei Betrieb im normalen Modus einen vorher festgelegten Nennwert ($V_N$) und der Lampenstrom (I) eine vorher festgelegte Nennstärke (IN) aufweist;

und wobei die Steuereinrichtung (60) so eingerichtet ist, dass sie das Stromsteuersignal ($S_1$) so erzeugt, dass der Lampenstrom (I) bei Betrieb in dem Dimmungsmodus eine geringere Stärke ($\beta \cdot I_N$) als die Nennstärke (IN) aufweist, wobei mit $\beta$ eine Dimmstufe in einem Bereich von 0 bis 1 bezeichnet wird; wobei die Steuereinrichtung (60) weiterhin so eingerichtet ist, dass sie das Spannungssteuersignal ($S_V$) so erzeugt, dass die Zwischenspannung ($V_0$) für zumindest einen Bereich von Werten der Dimmstufe einen höheren Wert ($V_H$) als der Sollwertpegel ($V_N$) der Zwischenspannung aufweist.

2. System nach Anspruch 1, wobei die Zwischenspannung ($V_0$) den höheren Wert ($V_H$) für sämtliche Werte von $\beta < 1$ aufweist.

3. System nach Anspruch 1, wobei die Zwischenspannung ($V_0$) den höheren Wert ($V_H$) für sämtliche Werte von $\beta < \beta_T$ aufweist und den Nennwert ($V_N$) für sämtliche Werte von $\beta$ in dem Bereich $\beta_T < \beta < 1$ aufweist, wobei $\beta_T$ eine vorher festgelegte Schwellendimmstufe anzeigt.

4. System nach Anspruch 1 mit mindestens einer vorher festgelegten Schwellendimmstufe ($\beta_{T1}$, $\beta_{T2}$, $\beta_{T3}$), wobei die Zwischenspannung ($V_0$) einen höheren Wert für eine Dimmstufe aufweist, die niedriger als eine solche Schwellendimmstufe ist, und einen geringeren Wert für eine Dimmstufe aufweist, die höher als die gleiche Schwellendimmstufe ist.

**5.** System nach Anspruch 1 oder Anspruch 4 mit mindestens zwei vorher festgelegten Schwellendimmstufen ($\beta_{T1}$, $\beta_{T2}$, $\beta_{T3}$), wobei die Zwischenspannung ($V_0$) einen konstanten Wert für alle Werte von $\beta$ zwischen zwei aufeinanderfolgenden Schwellendimmstufen aufweist.

**6.** System nach Anspruch 1 mit mindestens einem Dimmungsbereich zwischen zwei vorher festgelegten Grenzwerten $\beta1$ und $\beta2$, wobei innerhalb eines solchen Dimmungsbereichs die Zwischenspannung ($V_0$) eine kontinuierliche Funktion der Dimmstufe $\beta$ ist, wobei einer der Grenzwerte gleich 0 sein kann und/oder wobei einer der Grenzwerte gleich 1 sein kann.

**7.** System nach Anspruch 6, wobei die kontinuierliche Funktion eine lineare Funktion ist.

**8.** System nach Anspruch 1 mit einem Dimmungsbereich zwischen 0 und einem vorher festgelegten ersten Grenzwert $\beta1$, in dem die Zwischenspannung ($V_0$) stets den höheren Wert ($V_H$) aufweist, sowie mit einem Dimmungsbereich zwischen 1 und einem vorher festgelegten zweiten Grenzwert $\beta2$, in dem die Zwischenspannung ($V_0$) stets den Nennwert ($V_N$) aufweist.

**9.** Verfahren zur Ansteuerung und Dimmung einer HID-Lampe (2), wobei das Verfahren die folgenden Schritte umfasst, wonach:

    eine regelbare HBCF-Stromquellenstufe (20) vorgesehen wird;

    die HBCF-Stromquellenstufe (20) verwendet wird, um kommutierenden Lampengleichstrom (I) mit alternierender Stromrichtung zu erzeugen;

    der HBCF-Stromquellenstufe (20) eine Zwischenspannung ($V_0$) zugeführt wird;

    im normalen Modus der kommutierende Lampengleichstrom (I) mit einer vorher festgelegten Nennstärke (IN) erzeugt wird, während die Zwischenspannung ($V_0$) einen vorher festgelegten Sollwertpegel ($V_N$) aufweist;

    und in einem Dimmungsmodus der kommutierende Lampengleichstrom (I) mit einer geringeren Stromstärke als die Nennstärke (IN) erzeugt wird, während die Zwischenspannung ($V_0$) einen höheren Pegel ($V_H$) als der Sollwertpegel ($V_N$) aufweist.

**10.** Verfahren nach Anspruch 9, wobei die HID-Lampe (2) durch graduelles Reduzieren der Stromstärke gedimmt wird, und wobei die Zwischenspannung ($V_0$) bei Durchlaufen einer vorher festgelegten Schwellendimmstufe ($\beta_T$; $\beta_{T1}$, $\beta_{T2}$, $\beta_{T3}$) schrittweise erhöht wird.

**11.** Verfahren nach Anspruch 9, wobei die HID-Lampe (2) durch graduelles Reduzieren der Stromstärke gedimmt wird, und wobei zumindest innerhalb eines bestimmten Dimmungsbereichs die Zwischenspannung ($V_0$) im Verhältnis zu der Reduzierung der Stromstärke kontinuierlich erhöht wird.

**12.** Verfahren nach Anspruch 9, wobei die HID-Lampe (2) durch Reduzieren der Stromstärke von einem ersten Wert auf einen zweiten Wert gedimmt wird, und wobei die Zwischenspannung ($V_0$) auf einen Spannungswert erhöht wird, der dem zweiten Stromwert vor Verringern der Stromstärke entspricht.

**13.** Verfahren nach Anspruch 9, wobei das Dimmen der HID-Lampe (2) durch Erhöhen der Stromstärke von einem ersten Wert auf einen zweiten Wert reduziert wird, und wobei die Zwischenspannung ($V_0$) auf einen Spannungswert verringert wird, der dem zweiten Stromwert nach Erhöhen der Stromstärke entspricht.

## Revendications

**1.** Système de lampe (1) pour exciter une lampe HID (2), le système comprenant :

    un étage source de tension à convertisseur ascendant pouvant être commandé conçu pour fournir une tension intermédiaire ($V_0$) ;

    un étage source de courant HBCF pouvant être commandé (20), comportant des rails de tension (21, 22) connectés pour recevoir la tension intermédiaire ($V_0$), et comportant des bornes de sortie (28, 29) connectées à la lampe (2), l'étage source de courant (20) étant conçu pour générer un courant de lampe CC de commutation (I) possédant une direction de courant alternatif ;

    un dispositif de commande (60) pour commander l'étage à convertisseur ascendant (10) et l'étage source de courant (20) ;

    le dispositif de commande (60) fonctionnant dans un mode normal ou dans un mode de gradation d'intensité lumineuse, le dispositif de commande (60) étant conçu pour générer des signaux de commande ($S_v$, $S_I$) pour l'étage à convertisseur ascendant (10) et l'étage source de courant (20), respectivement, de sorte que la tension intermédiaire ($V_0$) possède une valeur nominale prédéterminée ($V_N$) et le courant de lampe (I) possède une amplitude nominale prédéterminée ($I_N$) lors du fonctionnement dans le mode normal ;

    et le dispositif de commande (60) étant conçu pour générer le signal de commande de courant ($S_I$) pour que le courant de lampe (I) possède une amplitude ($\beta \cdot I_N$) inférieure à l'amplitude de courant nominale ($I_N$), lors du fonctionnement dans le mode de gradation d'intensité lumineuse, $\beta$ désignant un niveau de gradation d'intensité lumineuse dans une plage de 0 à 1 ; le dispositif de commande (60) étant en outre conçu pour générer le signal de commande de tension ($S_V$) pour que la tension intermédiaire ($V_0$) possède une valeur ($V_H$) supérieure au niveau nominal de tension intermédiaire ($V_N$), pour au moins une plage de valeurs du niveau de gradation d'intensité lumineuse.

2. Système selon la revendication 1, dans lequel la tension intermédiaire ($V_0$) possède la valeur plus élevée ($V_H$) pour toutes les valeurs de 0 < 1.

3. Système selon la revendication 1, dans lequel la tension intermédiaire ($V_0$) possède la valeur plus élevée ($V_H$) pour toutes les valeurs de $\beta < \beta_T$ et possède la valeur nominale ($V_N$) pour toutes les valeurs de P dans la plage $\beta_T < \beta < 1$, $\beta_T$ indiquant un niveau de seuil prédéterminé de gradation d'intensité lumineuse.

4. Système selon la revendication 1, comportant au moins un niveau de seuil prédéterminé de gradation d'intensité lumineuse ($\beta_{T1}$, $\beta_{T2}$, $\beta_{T3}$), dans lequel la tension intermédiaire ($V_0$) possède une valeur plus élevée pour un niveau de gradation d'intensité lumineuse inférieur à un tel niveau de seuil de gradation d'intensité lumineuse et une valeur inférieure pour un niveau de gradation d'intensité lumineuse supérieur au même niveau de seuil de gradation d'intensité lumineuse.

5. Système selon la revendication 1 ou la revendication 4, comportant au moins deux niveaux de seuil prédéterminés de gradation d'intensité lumineuse ($\beta_{T1}$, $\beta_{T2}$, $\beta_{T3}$), dans lequel la tension intermédiaire ($V_0$) possède une valeur constante pour toutes les valeurs de P entre deux niveaux de seuil successifs de gradation d'intensité lumineuse.

6. Système selon la revendication 1, comportant au moins une plage de gradation d'intensité lumineuse entre deux valeurs limites prédéterminées $\beta$1 et $\beta$2, dans lequel, au sein d'une telle plage de gradation d'intensité lumineuse, la tension intermédiaire ($V_0$) est une fonction continue du niveau de gradation d'intensité lumineuse $\beta$, dans lequel une desdites valeurs limites peut être égale à 0 et/ou dans lequel une desdites valeurs limites peut être égale à 1.

7. Système selon la revendication 6, dans lequel ladite fonction continue est une fonction linéaire.

8. Système selon la revendication 1, comportant une plage de gradation d'intensité lumineuse entre 0 et une première valeur limite prédéterminée $\beta$1 dans laquelle la tension intermédiaire ($V_0$) possède toujours la valeur plus élevée ($V_H$), et comportant une plage de gradation d'intensité lumineuse entre 1 et une seconde valeur limite prédéterminée $\beta$2 dans laquelle la tension intermédiaire ($V_0$) possède toujours la valeur nominale ($V_N$).

9. Procédé pour réaliser une excitation et une gradation d'intensité lumineuse d'une lampe HID (2), le procédé comprenant les étapes de :

   la fourniture d'un étage source de courant HBCF pouvant être commandé (20) ;
   l'utilisation de l'étage source de courant HBCF (20) pour générer un courant de lampe CC de commutation (I) possédant une direction de courant alternatif ;
   la fourniture, à l'étage source de courant HBCF (20), d'une tension intermédiaire ($V_0$) ;
   dans un mode normal, la génération du courant de lampe CC de commutation (I) avec une amplitude de courant nominale prédéterminée ($I_N$) alors que la tension intermédiaire ($V_0$) possède un niveau nominal prédéterminé ($V_N$) ; i
   et dans un mode de gradation d'intensité lumineuse, la génération du courant de lampe CC de commutation (I) avec une amplitude de courant inférieur à ladite amplitude de courant nominale ($I_N$) alors que la tension intermédiaire ($V_0$) possède un niveau ($V_H$) supérieur audit niveau nominal ($V_N$).

10. Procédé selon la revendication 9, dans lequel la gradation d'intensité lumineuse de la lampe HID (2) est réalisée en réduisant progressivement l'amplitude de courant, et dans lequel la tension intermédiaire ($V_0$) est augmentée progressivement lors du passage d'un niveau de seuil prédéterminé de gradation d'intensité lumineuse ($\beta_T$ ; $\beta_{T1}$, $\beta_{T2}$, $\beta_{T3}$).

11. Procédé selon la revendication 9, dans lequel la gradation d'intensité lumineuse de la lampe HID (2) est réalisée en réduisant progressivement l'amplitude de courant, et dans lequel, au moins au sein d'une certaine plage de gradation d'intensité lumineuse, la tension intermédiaire ($V_0$) est augmentée en continu proportionnellement avec la réduction de l'amplitude de courant.

12. Procédé selon la revendication 9, dans lequel la gradation d'intensité lumineuse de la lampe HID (2) est réalisée en réduisant l'amplitude de courant d'une première valeur à une seconde valeur, et dans lequel la tension intermédiaire ($V_0$) est augmentée jusqu'à une valeur de courant correspondant à la seconde valeur de courant avant que l'amplitude de courant soit réduite.

**13.** Procédé selon la revendication 9, dans lequel la gradation d'intensité lumineuse de la lampe HID (2) est réduite en augmentant l'amplitude de courant d'une première valeur à une seconde valeur, et dans lequel la tension intermédiaire ($V_0$) est réduite jusqu'à une valeur de courant correspondant à la seconde valeur de courant après que l'amplitude de courant a augmenté.

FIG. 1

FIG. 2

FIG. 3

FIG. 4

FIG. 5A

FIG. 5B

FIG. 5C

FIG. 5D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008072136 A